# EUROPEAN PATENT APPLICATION

(11) **EP 2 384 958 A1**
(43) Date of publication of application: **09.11.2011**
(21) Application number: 11165230.1
(22) Date of filing: 09.05.2011
(51) Int. Cl.: B62H 3/00, B62H 3/10

(54) **Parking structure for bicycles**

(30) Priority: 07.05.2010 IT MI20100823
(71) Applicant: Locati, Guido Giovanni, 20052 Monza (MB) (IT)
(72) Inventor: Locati, Guido Giovanni, 20052 Monza (MB) (IT)
(74) Representative: Maccalli, Marco

(57) **Abstract**

Parking structure (100) for bicycles and similar vehicles, comprising: a cantilever roof (105) defining a covered sheltered area; a plurality of blocking systems (115) of the bicycles, for the secure parking thereof; a control central (125) for the selective control of the activation/deactivation of the blocking systems; and at least one photovoltaic panel (130) coupled to the cantilever roof for transforming the sun radiation into electric energy exploitable for powering the parking structure.

## Description

The present invention relates to a structure for parking bicycles and similar vehicles.

Today's critical conditions experienced in most urban centres due to traffic congestion and air pollution are increasingly leading to an afterthought of citizens habits about their urban travelling. In particular, the bike is a means of transport that is coming back into vogue, which often allows travelling through the city faster than cars do, and with more flexibility even than the public transport (to which, advantageously, it may also be coupled).

One of the major deterrents to the use of the bike is the risk of theft of the same: many people, potentially in favour of using this ecological and efficient transport means, give up since they know to have a high probability of having their bike stolen, all the more reason when there is a need to leave it in a public space for a long period, such as for a visit to an hospital or outside the workplace. The concern to be subjected to the theft of their own bike, or just to have to leave it in open spaces exposed to the atmospheric elements (rain, snow, sun, etc..), sometimes leads people to use obsolete bikes so that they result not much attractive and desirable for thieves; however, such second best is not satisfactory at all, since using an obsolete, scarcely efficient transport means is certainly unpleasant, and may also be dangerous.

Also to compensate for this problem, the municipal authorities of the major cities have offered to the citizens public bikes configured for the so-called "bike-sharing" service. The implementation of this service provides that several stations are located in various parts of the city, each one with dozens of bikes, which can be collected by the user and then returned even in a different location from that of collection. The bikes conceived for the bike-sharing are hardly attractive for thieves, as they are unequivocally recognizable, hence not re-sellable, and are specifically built for the purpose: they are very robust and easily adaptable to the physical characteristics of the user.

Moreover, according to the Applicant, the bike-sharing service as a substitute for the use of individual bike can not be successful, and furthermore the installation costs of the service are high (it is sufficient to think to the enormous bike fleet to be prepared).

In fact, the Applicant has observed that for the user it would be by far preferable to use his/her own personal bike, which better fits to his/her own individual characteristics, as well as his/her preferences, with respect to the standard bikes of a bike-sharing service.

The Applicant has tackled the problem of devising a solution that will encourage the use of the private bike, as well as other types of bicycles, thereby overcoming the problems discussed above.

According to the present invention, a parking structure is provided for bicycles and similar vehicles, including:
- a cantilever roof defining a covered sheltered area;
- a plurality of blocking systems of the bicycles, for the secure parking thereof;
- a control central for the selective control of the activation/deactivation of the blocking systems; and
- at least one photovoltaic panel coupled to the cantilever roof for transforming the sun radiation into electric energy exploitable for powering the parking structure.

Preferential but not deemed essential features of the present invention are set out in the dependent claims.

These and other features and advantages of the present invention will be best understood after reading the following detailed description of some practical embodiments thereof, in conjunction with the attached drawings, wherein:
**Figure 1** schematically shows a bicycle parking structure according to an embodiment of the present invention;
**Figure 2** shows schematically but in greater detail a bicycles security blocking system of the parking structure of **Figure 1**;
**Figure 3** schematically shows a pillar in which a control central of the parking structure of **Figure 1** is made, and
**Figure 4** schematically shows a bicycles security blocking system alternative to that of **Figure 2**.

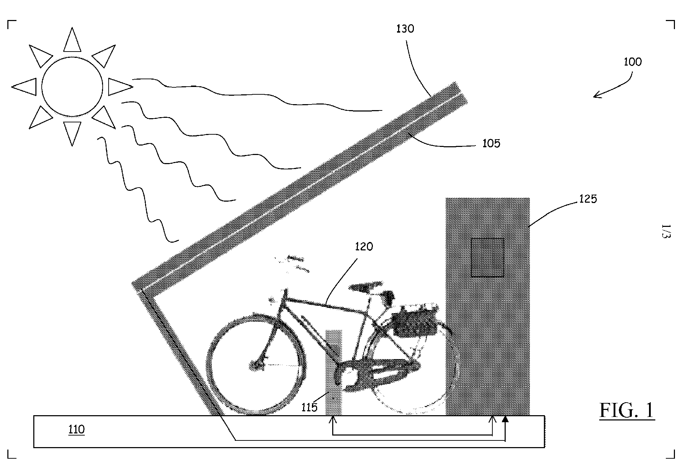

With reference to the drawings, in **Figure 1** there is schematically shown a bicycles parking structure according to an embodiment of the present invention.

The parking structure, denoted as a whole by 100, comprises a cantilever roof, of any shape, apt to define, below it, a covered area sheltered against atmospheric events, bad weather, sun. The cantilever roof **105** is anchored to the ground **110**, and below it, and hence covered by the cantilever roof, a plurality of support and coupling pillars **115** are installed for bicycles, bikes in the example. The pillars **115** are firmly anchored to the ground, for example they have a base that is buriedcemented to the ground, and extend vertically upward up to a suitable height, for example up to an average height of the horizontal central tube of the frame of a man's bike, or of the oblique central tube of a woman's bike, or at the height of the wheel, and generally in correspondence of a non-removable part of the bicycle. For example, the pillars **115** may be arranged in linear succession or in semicircle or according to any other arrangement.

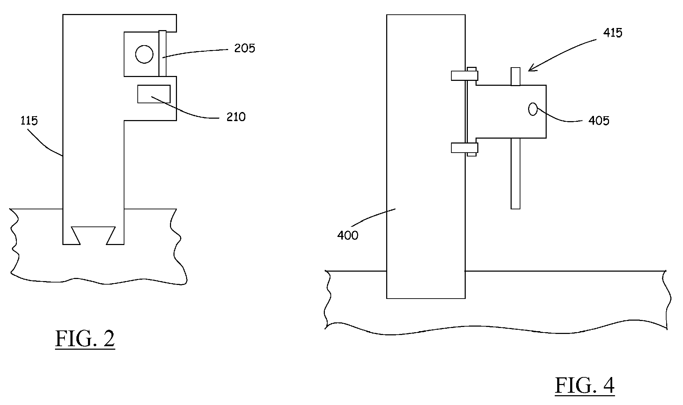

As shown in greater detail in **Figure 2**, each pillar is provided with a security blocking system for bicycles, such as bikes, including, in the example herein considered, a sliding lock **205** operated by an actuator **210**, for example of electromechanical type. Advantageously, according to the present invention, the blocking system is made in such a way as to be substantially universal, so as to allow the use thereof with substantially any type of medium-size bike available on the market.

In alternative embodiments, the blocking system can be a lock operated by a pneumatic actuator, or a chain, or an electromagnet, or a wire rope having a suitable strength.

Referring back to **Figure 1**, the pillars **115**, and in particular the bicycles blocking system, specifically the actuator **210** of the lock **205**, are connected to a central **125** for controlling and commanding the parking structure **100.** In particular, also the control central **125** is made in the form of a pillar station, anchored to the ground and preferably arranged sheltered by the shelter **105** as well. Through the control central **125**, the users may generally access the services provided by the parking structure **100**, and in particular operate for opening/closing the locks of the blocking systems of the pillars **115**; for example, such operation may be subjected to payment of a fee by users. In particular, the locks **205** may be normally closed, and for the opening and closing back thereof for the parking of the bike, and for the subsequent re-opening at the end of the parking time, the user has to interact with the control central **125**.

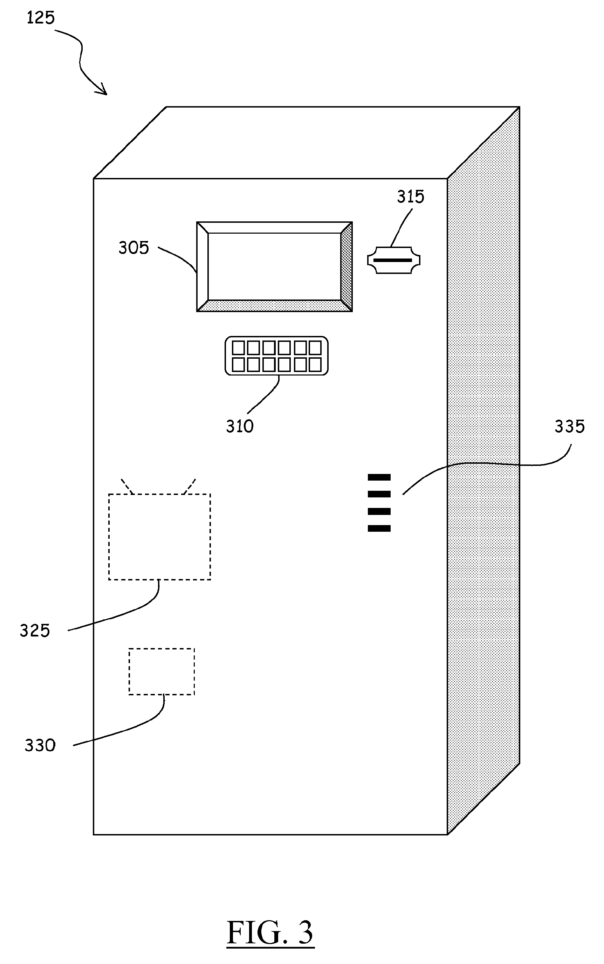

For example, as schematically shown in Figure 3, in the pillar that forms the central **125** there are integrated a preferably graphical-type display device **305**, such as a liquid crystal display (LCD), a keyboard **310** for the input of data and commands by the user, a reader **315** of magnetic cards of the ATM card type, for enabling the use of the services provided by the parking structure **100** and possibly for the payment thereof. The control central **125** includes a programmable processing unit, for example a microprocessor, and may also be connected to a remote service management center (not shown in the drawings) by the cabled or cellular phone line, or by other type of connection.

Advantageously, according to an embodiment of the present invention, above the cantilever roof **105**, for example lying on the roof thereof, a photovoltaic panel **130** is installed, adapted to convert the solar radiation into electrical energy. The electrical energy thus generated (and stored in appropriate energy storage means) is used for powering the parking structure **100**, particularly the control central 125 and the pillars **115**: in this way, the parking structure is substantially self-powered by recourse to alternative energy. The size of the cantilever roof are generally such as to allow the installation of a photovoltaic panel having sufficient surface to generate surplus electric energy with respect to the needs of the parking structure **100**. Preferably, the parking structure **100** is still connected to the city electrical energy distribution network too, so as to be able to operate even in the absence or insufficient sunlight.

Advantageously, the parking structure **100** can be fully closable along its perimeter, for example during the night, through proper rolling motorized closures (shutters), supplied by a low voltage; for example, such shutters may be provided at the top of the cantilever roof **105**, whereas fixed grids may be used laterally at the bottom. The possibility of closing the parking structure may be useful in particularly dangerous or vandalism-risking zones: once closed, the access to the parking structure **100** is inhibited, and hence all that is placed therewithin is protected. The closure and subsequent opening back of the parking structure **100** may be automatic and timed, autonomously managed by the control central **125**, and the rolling shutters may still be opened even in extemporary manner upon request of an enabled user, by interacting through the central **125** (which, to the purpose, will be arranged in order to have a user interface accessible from the external of the parking structure **100** even when the latter is closed).

To enjoy the service, the user, arrived at the parking structure **100** (supposed to be opened), places his/her own bike at one of the pillars **115**, and then goes to the control central **125**. Then, if necessary after placing a card or an identification code, the user selects the pillar **115** at which he has placed the bike (to the purpose, all the pillars **115** are equipped with a unique identifier, such as a number marked on the pillar itself). The user may also set a desired parking time (which may affect the fee to be paid for enjoying the service). The control central **125**, possibly after having contacted the remote service center for the proper checks (user's identity, authorization of the same to enjoy the service, debiting of the agreed fee), controls the closing of the lock **205**.

The methods for user identification can also be different, such as detectors of biometric parameters of the user (fingerprint, iris, voice, etc...). It may also be provided that the user, in order to be able to enjoy the service, makes use of his/her own cellular phone, through which he/she will receive from the control central **125**, or from the remote service centre, an identification code to be entered via the keyboard **310** for achieving the closure of the lock **205**.

In preferred embodiments, the parking structure **100** according to the present invention is designed to provide one or more of a plurality of other services, in addition to the one of bicycle secure parking. In particular, this is made possible thanks to the fact that the energy generated by the photovoltaic panel **130** is overabundant with respect to the needs of the central and of the blocking systems of the pillars **115**.

In particular, and purely by way of example, a Wi-Fi base station **325** may be built-in within the pillar that form the central **125**, such Wi-Fi station being connected to the wired or cellular line, for making a Wi-Fi "hot-spot" through which the users can connect to the Internet, while being in the parking structure **100** or in the immediate vicinity thereof, via their own cellular phones, smartphones, laptops, and browse the web or check their own e-mail inbox.

Alternatively or additionally, the control central **125** can offer to users a Bluetooth connection **330**, still for allowing them to connect to the Internet by using their cellular phones or laptops.

USB (Universal Serial Bus) ports **335**, or other types of ports (e.g., sockets of the type for car cigarette lighter) may be provided within the pillar that forms the control central **125**, through which the users can recharge the cellular phones and/or the laptops.

The parking structure can also be equipped with lighting, for lighting both the parking area and the surrounding areas; also the energy needed for the lighting can be obtained from the solar radiation through the photovoltaic panel **130**. The lights can preferably be energy efficient. The lighting, as well as to ensure a greater security, improves the urban decor.

The electrical energy generated by the photovoltaic panel **130** in overabundance with respect to the needs of the central **125** and the pillar **115**, *i.e.* the surplus of available energy, can be exploited to provide users with a service of recharge for batteries of electric motor bicycles; for example, the sockets for the provision of the electrical energy at the appropriate voltage for charging batteries can be directly provided on the pillars **115**. Part of the electrical energy generated by the photovoltaic panel **130** can also be fed back into the network, upon reimbursement or payment by the electrical energy distribution company.

Advantageously, the delivery of all theses services may be subject to the payment of a respective fee by the users.

In an alternative embodiment of the present invention, schematised in **Figure 4**, a wall **400** may be provided or already existing, to which the cantilever roof can be attached. In such case, the bicycles support and coupling pillars, instead of being anchored to the ground and extending vertically upwards, may be pillars **415** anchored to the above-said wall **400** and extend horizontally, with a lock **405** horizontally sliding under the command an actuator similar to the actuator **210**.

The present invention provides a bicycles parking structure sheltered from weather conditions, wherein the user can leave safely his/her own bike, bike that is thus safer than the bikes available in bike-sharing, since fitted to the own particular characteristics and properly maintained not obsolete, without fear of theft, even for a long time and with confidence to find it where it was left. In addition, the user does not have to go to the bike-sharing station for taking a bike, but goes towards the destination by its own bike, directly from his/her own home, without need for adjustments. Parking structures according to the present invention can be installed at the external of public offices, railway/underground stations, stops/terminus of urban surface transportation means, outside banks.

The total cost to be incurred for the installation of parking structures according to the invention is much lower than that of the bike-sharing (roughly one third), because there is no need to build and maintain a public bike fleet: the latter are very expensive both in purchase and in the required heavy and intensive maintenance. Moreover, the offered service is decidedly better than the bike-sharing: safe and covered parking with services connected in a totally eco-friendly system, thanks to the cantilever roof with photovoltaic elements. It is not therefore essential to be connected to the electrical network during installation. This allows significant savings, as well as the possibility of reaching areas not served by the electrical energy distribution network, such as parks.

The parking structure, particularly the cantilever roof, may also accommodate outdoor advertising (billboards), also possibly illuminated; this allows amortizing the installation costs not only by the possible fees paid by users, but also thanks to the advertising revenue.

The described parking structure may also offer a range of additional services to the user, and in general the control central acts as management means for the access by the users to various services that can be provided by the structure by exploiting the energy generated from the photovoltaic panel/panels; a controlled sharing of the available energy generated independently from the parking structure itself is thus made possible.

The present invention has been described herein with reference to exemplary embodiments thereof. Those skilled in the art will be able to devise without any effort many variations to the described embodiments, as well as different embodiments, without departing from the protection scope set out in the annexed claims. In particular, the parking structure according to the present invention can easily be adapted to the parking of motor bicycles, as an alternative to or in combination with bikes.

## Claims

1. A parking structure (**100**) for bicycles and similar vehicles, comprising:
- a cantilever roof (**105**) defining a covered sheltered area;
- a plurality of blocking systems (**115,205,210;415,405**) of the bicycles, for the secure parking thereof;
- a control central (**125**) for the selective control of the activation/deactivation of the blocking systems;
- at least one photovoltaic panel (**130**) coupled to the cantilever roof for transforming the sun radiation into electric energy exploitable for powering the parking structure.

2. The parking structure according to claim 1, wherein the blocking systems are realized in such a way as to enable locking and blocking of substantially any bicycle.

3. The parking structure according to claim 1 or 2, wherein the control central is configured for providing or at least controlling the provision of one or more among the following services: Wi-Fi Internet access, Bluetooth Internet access, recharge of mobile terminal batteries through connection to USB ports, recharge of batteries of electric motor bicycles.

4. The parking structure according to claim 3, wherein said services are provided exploiting the energy generated by the photovoltaic panel.

5. The parking structure according to any one of the preceding claims, **characterized by** comprising a perimeter closure system coupled to the cantilever roof, for selectively inhibiting the access to the interior space of the parking structure.

6. The parking structure according to any one of the preceding claims, wherein said blocking systems comprise pillars anchored to the ground and extending vertically therefrom, and/or horizontally extending bars attached to a perimeter wall of the parking structure.

7. The parking structure according to claim 6, wherein said blocking systems comprise sliding locks actuated by actuators controlled by said central.

8. The parking structure according to any one of the preceding claims, wherein said central is provided with user recognition means for condition the opening/closure of the blocking systems to the assessment of the entitlement of a user to enjoy the service.

9. The parking structure according to claim 8, wherein said user recognition means are configured for allowing the provision of the service conditioned to the payment of a fare.

10. The parking structure according to any one of the preceding claims, wherein said cantilever roof is equipped with a lighting system for lighting the parking area and the area around it, the energy for the lighting system being generated by the photovoltaic panel.
